(19) Europäisches Patentamt
European Patent Office
Office européen des brevets

(11) **EP 1 627 731 B1**

(12) **EUROPEAN PATENT SPECIFICATION**

(45) Date of publication and mention
of the grant of the patent:
**02.01.2013 Bulletin 2013/01**

(21) Application number: **04727105.1**

(22) Date of filing: **13.04.2004**

(51) Int Cl.:
***B32B 27/30*** *(2006.01)*

(86) International application number:
**PCT/JP2004/005279**

(87) International publication number:
**WO 2004/098880 (18.11.2004 Gazette 2004/47)**

(54) **LAMINATE**

LAMINAT

STRATIFIE

(84) Designated Contracting States:
**AT BE BG CH CY CZ DE DK EE ES FI FR GB GR HU IE IT LI LU MC NL PL PT RO SE SI SK TR**

(30) Priority: **12.05.2003 JP 2003133690**

(43) Date of publication of application:
**22.02.2006 Bulletin 2006/08**

(73) Proprietor: **DAIKIN INDUSTRIES, LTD.**
**Osaka-shi, Osaka 530-8323 (JP)**

(72) Inventors:
• **KITAHARA, Takahiro**
**c/o DAIKIN INDUSTRIES, LTD.**
**Osaka 5668585 (JP)**
• **SAKAKIBARA, Shingo**
**c/o DAIKIN INDUSTRIES, LTD.**
**Osaka 5668585 (JP)**
• **FUJITA, Eiji**
**c/o DAIKIN INDUSTRIES, LTD.**
**Settsu-shi, Osaka 5668585 (JP)**

(74) Representative: **HOFFMANN EITLE**
**Patent- und Rechtsanwälte**
**Arabellastrasse 4**
**81925 München (DE)**

(56) References cited:
| | |
|---|---|
| **EP-A- 1 223 030** | **WO-A1-01/18142** |
| **WO-A1-01/23795** | **WO-A1-01/58686** |
| **WO-A1-01/60606** | **WO-A1-99/45044** |
| **JP-A- 11 207 840** | **JP-A- 2000 291 849** |
| **JP-A- 2002 144 499** | **JP-A- 2002 307 624** |
| **JP-A- 2002 357 285** | |

**Description**

TECHNICAL FIELD

The present invention relates to a laminate.

BACKGROUND ART

The use of resin laminates is becoming the main trend in manufacturing piping materials for transferring gasoline and like fuels in view of their being processible, rustproof, lightweight and economical, among others. Because of the recent trend for regulations on fuel evaporation and emission to become more and more tightened, the demand for improvements in fuel impermeability is increasing.

So far disclosed as fuel-impermeable resin laminates are resin-made tubes resulting from lamination of a layer mainly consisting of at least one species selected from the group consisting of polybutylene terephthalate [PBT], polybutylene naphthalate [PBN], polyethylene terephthalate [PET] and polyethylene naphthalate [PEN] and a layer mainly consisting of PBT (cf. e.g. Japanese Kokai Publication 2002-213655), and resin-made tubes comprising a resin layer mainly consisting of polyphenylene sulfide [PPS] and a resin layer mainly consisting of PBT (cf. e.g. Japanese Kokai Publication 2002-267054). They have problems, however; namely, they are unsatisfactory in heat resistance, chemical resistance and solvent resistance, among others.

Fluororesins are excellent in heat resistance, chemical resistance and solvent resistance. However, fluororesins are poor in mechanical strength and dimensional stability and, in addition, expensive. It is therefore desirable that they be used in the form of laminates with another or other organic materials.

As laminates made of at least one fluororesin and at least one other organic material and showing fuel impermeability as so far proposed, there are three-layer laminates comprising a layer of polyamide 12 [PA12], a layer of a tetrafluoroethylene [TFE]/perfluoro(methyl vinyl ether) [PMVE] copolymer and a layer of an ethylene/TFE copolymer [ETFE] provided with electric conductivity, or three-layer laminates comprising a layer of PA12, a layer of TFE/hexafluoropropylene copolymer [FEP] and a layer of an ETFE provided with electric conductivity (cf. e.g. International Publication WO 01/18142). However, the level of fuel impermeability that has been required to be attained in recent years becomes to be higher than those three-layer copolymer laminates can attain.

SUMMARY OF THE INVENTION

In view of the above-discussed state of the art, it is an object of the present invention to provide a laminate in which at least one fluororesin is used and which is highly impermeable to fuels.

The present invention provides a laminate having a fuel permeation rate of not higher than 1.5 g/m$^2$/day and having

    i) a layer (A) comprising a fluororesin (a) which

-    has a fuel permeation coefficient of $\leq$ 1 g·mm/m$^2$/day; and

-    comprises a fluororesin (a1) having a fuel permeation coefficient of $\leq$ 0.3 g·mm/m$^2$/day and being constituted by a chlorotrifluoroethylene (CTFE) copolymer comprising
    90-99.9 mol-% of CTFE units and tetrafluoroethylene (TFE) units; and
    10-0.1 mol-% of units derived from a monomer [A] copolymerizable with CTFE and TFE; and

    ii) a layer (B) comprising a fluorine-free organic material.

DETAILED DISCLOSURE OF THE INVENTION

In the following, the invention is described in detail.

The laminate of the invention has a fuel permeation rate of not higher than 1.5 g/m$^2$/day.

The fuel permeation rate so referred to herein is the mass of a fuel allowed to permeate per unit area per day and is the value obtained by measuring, in accordance with SAEJ 1737, the permeation at 60°C of an isooctane/toluene/ethanol mixed solvent [CE10] prepared by mixing up isooctane, toluene and ethanol in a volume ratio of 45:45:10. The laminate of the invention, which has a fuel permeation rate within the above range, can be made one having a high level of fuel impermeability. Within the above range, a lower limit to the fuel permeation rate can be 0.1 g/m$^2$/day, for instance. A preferred upper limit to the fuel permeation rate is 1.2 g/m$^2$/day, and a more preferred upper limit is 1.0 g/m$^2$/day.

The laminate of the invention is a laminate having a fluororesin layer (A) and a fluorine-free organic material layer (B).

The fluororesin is a resin comprising a fluorine-containing ethylenic polymer having a fluorine-containing ethylenic monomer-derived repeating unit. The repeating unit derived from one monomer in the polymer chain is herein sometimes referred to as "monomer unit".

The fluorine-containing ethylenic monomer so referred to herein is a fluorine- and vinyl group-containing monomer having none of the adhesive functional groups to be described later herein.

The fluorine-containing ethylenic monomer is not particularly restricted but includes, among others, tetrafluoroethylene [TFE], vinylidene fluoride [VdF], chlorotrifluoroethylene [CTFE], vinyl fluoride [VF], hexafluoroisobutene, perfluoro(alkyl vinyl ether) [PAVE] species, and a vinyl monomer represented by the general formula (I):

$$CX^3X^4=CX^1(CF_2)_nX^2 \qquad (I)$$

(wherein $X^1$, $X^3$ and $X^4$ are the same or different and each represents a hydrogen or fluorine atom, $X^2$ represents a hydrogen, fluorine or chlorine atom, and n represents an integer of 1 to 10), and one or a combination of two or more of these may be used.

The vinyl monomer represented by the above general formula (I) is not particularly restricted but includes, among others, vinyl monomers represented by the general formula (i):

$$CH_2=CX^1(CF_2)_nX^2 \qquad (i)$$

(wherein $X^1$ represents a hydrogen or fluorine atom, $X^2$ represents a hydrogen, fluorine or chlorine atom and n represents an integer of 1 to 10), such as perfluoro(1,1,2-trihydro-1-hexene), perfluoro(1,1,5-trihydro-1-pentene); and hexafluoropropylene [HFP].

The fluorine-containing ethylenic polymer mentioned above may be one comprising not only the monomer unit derived from the above-mentioned fluorine-containing ethylenic monomer but also the monomer unit derived from a fluorine-free ethylenic monomer, if desired.

The fluorine-free ethylenic monomer so referred to herein is a vinyl group-containing monomer having no fluorine atom and none of the adhesive functional groups to be described later herein. The fluorine-free ethylenic monomer is not particularly restricted but includes, among others, ethylene [Et], propylene [Pr], 1-butene, 2-butene, vinyl chloride and vinylidene chloride, and one or a combination of two or more of these may be used.

A tetrafluoroethylene-based copolymer [TFE-based copolymer] is preferred as the above-mentioned fluorine-containing ethylenic polymer. The TFE-based copolymer so referred to herein is a polymer comprising the tetrafluoroethylene unit [TFE unit] derived from TFE. The TFE unit is represented by the molecular structure [-CF_2-CF_2-]. The TFE-based copolymer may be one comprising, together with the TFE-derived molecular structure, one or more of the monomer units derived from fluorine-containing ethylenic monomers other than TFE and/or the monomer units derived from fluorine-free ethylenic monomers.

The TFE-based copolymer is not particularly restricted but includes, among others, Et/TFE/HFP copolymers, Et/TFE copolymers, TFE/VdF/HFP copolymers, TFE/PAVE copolymers, TFE/HFP copolymers, and TFE/HFP/PAVE copolymers.

The fluororesin may comprise one or a combination of two or more of the fluorine-containing ethylenic polymers.

The fluororesin layer (A) comprises a fluororesin (a) having a fuel permeation coefficient of not higher than 1 g·mm/m²/day.

The fluororesin (a) is preferably a perfluoro-based resin.

Among the fluororesins, the perfluoro-based resin is most excellent in heat resistance, chemical resistance, water repellency and oil repellency, nonstickiness, electrical insulating quality, low liquid chemical permeability and low fuel permeability, among others, and the laminate having a layer of the perfluoro-based resin as a surface layer can satisfactorily manifest those features characteristic of fluororesins.

The perfluoro-based resin comprises a perfluoro-based polymer.

The phrase "perfluoro-based" in the above term "perfluoro-based polymer" as used herein means that the main monomer unit or units in the molecular structure of the polymer are completely fluorinated.

The main monomer unit(s) is(are) the monomer unit(s) derived from one or more monomer species determining the physical properties, such as the melting point, of the polymer and generally is(are) the monomer unit(s) derived from a monomer(s) amounting to not less than 80 mole percent of the monomers from which the whole monomer units in the molecular structure of the polymer are derived. The above mole fraction may be 100 mole percent, for instance.

When the above mole fraction of the main monomer unit(s) in the perfluoro-based polymer is less than 100 mole percent, the monomer unit(s) other than the main monomer unit(s) may not be completely fluorinated; in this respect, the above-mentioned perfluoro-based polymer is to be conceptually distinguished from perfluoro polymers.

When the whole monomer unit(s) in the perfluoro-based polymer is the main monomer unit(s) and when the monomer unit(s) other than the main monomer unit(s) is(are) completely fluorinated, the perfluoro-based polymer, which is a perfluoro polymer, includes, within the meaning thereof, perfluoro polymers.

The perfluoro-based polymer is not particularly restricted but includes, among others, tetrafluoroethylene/perfluoro(methyl vinyl ether copolymers [MFAs] and TFE/HFP copolymers.

The above-mentioned fluororesin (a) has a fuel permeation coefficient of not higher than 1 g·mm/m$^2$/day.

One or a combination of two or more of all the fluororesins can be used.

The perfluoro-based polymer to be used as the fluororesin (a) is preferably a copolymer (I) comprising the TFE unit and the perfluoro monomer unit derived from a perfluoro monomer represented by the general formula (ii):

$$CF2=CF-Rf^1 \qquad (ii)$$

(wherein Rf$^1$ represents CF$_3$ or ORf$^2$ in which Rf$^2$ represents a perfluoroalkyl group containing 1 to 5 carbon atoms).

The perfluoro monomer unit may comprise one single species or two or more species.

The copolymer (I) is not particularly restricted. For example, one single species or a combination of two or more species may be used.

When two or more copolymer (I) species are used, they are well compatible with each other or one another and therefore can form layers without any distinct boundary as resulting from mixing up upon melting, and the mixing ratio is adjusted so that the layers as a whole may have a preferred fuel permeation coefficient and a preferred melting point.

When two or more copolymer (I) species are used in forming the layer (A) in the laminate of the invention, the copolymer (I) species employed are fed to a coextruder for laminate manufacture without preliminary blending thereof or the layers produced separately are laid one on another and then subjected to heat melting, whereby the layer (A) is made excellent in interlayer adhesion within the layer (A) owing to the compatibility between or among the copolymer species without introducing any of the adhesive functional groups to be described later herein.

In cases where two or more copolymer (I) species are used, the layer (A) in the laminate of the invention may also be one formed following preparation of a polymer alloy by mixing up in advance the respective copolymer (I) species employed.

The copolymer (I) is not particularly restricted but includes, among others,

(I-I) copolymers comprising 80 to 95 mole percent, preferably 88 to 93 mole percent, of the TFE unit, and 5 to 20 mole percent, preferably 7 to 12 mole percent of, the hexafluoropropylene unit,

(I-II) copolymers comprising 85 to 97 mole percent of the TFE unit, and 3 to 15 mole percent of at least one perfluoro monomer unit represented by the general formula (iia):

$$CF_2=CF-ORf^1 \qquad (iia)$$

(wherein Rf$^1$ represents a perfluoroalkyl group containing 1 to 5 carbon atoms), and

(I-III) copolymers comprising 80 to 95 mole percent of the TFE unit, and 5 to 20 mole percent in total of the hexafluoropropylene unit and at least one perfluoro monomer unit represented by the general formula (iia).

The monomer units described above referring to the copolymers (I-I), (I-II) and (I-III) are main monomer units in the above-mentioned perfluoro-based polymers, and the mole percentages of the respective monomer units are the mole fractions-based on the whole amount, which is taken as 100 mole percent, of the monomers from which the main monomer units in the perfluoro-based polymers are derived.

The copolymers (I-III) may fall under either of the categories fluororesins (a1) and fluororesins (a2), which are to be described later herein, as a result of modification of their composition within the above range.

Among the fluororesins to be used as the fluororesin (a), at least one species preferably has a fuel permeation coefficient of not higher than 0.5 g·mm/m$^2$/day, more preferably not higher than 0.3 g·mm/m$^2$/day.

The fluororesin (a) comprises a fluororesin (a1) having a fuel permeation coefficient of not higher than 0.3 g·mm/m$^2$/day.

A preferred upper limit to the fuel permeation coefficient of the fluororesin (a1) is 0.27 g·mm/m$^2$/day.

With the layer (A) comprising the fluororesin (a1), the laminate of the invention can readily attain such a high level of fuel impermeability that the fuel permeation rate is within the above-mentioned range.

The polymer constituting the fluororesin (a1) is a chlorotrifluoroethylene copolymer ("CTFE copolymer") comprising chlorotrifluoroethylene units [CTFE units], tetrafluoroethylene units [TFE units] and monomer [A] units derived from monomers [A] copolymerizable with CTFE and TFE.

The monomer [A] is not particularly restricted but may be any, other than CTFE or TFE, of those mentioned hereinabove referring to the fluorine-containing ethylenic monomer and fluorine-free ethylenic monomer. Preferred are, however, VdF, HFP, PAVEs or vinyl monomers represented by the general formula (i) given hereinabove.

The PAVE to be used as the monomer [A] is preferably a perfluoro(alkyl vinyl ether) represented by the general formula (ii) given hereinabove, and perfluoro(methyl vinyl ether) [PMVE] and perfluoro(propyl vinyl ether) [PPVE] are more preferred among others. From the heat resistance viewpoint, PPVE is still more preferred.

Use may be made, as the monomer [A], of one or a combination of two or more of the PAVEs and of the vinyl monomers represented by the general formula (i) given hereinabove.

The CTFE copolymer is not particularly restricted but includes, among others, CTFE/TFE/HFP copolymers, CTFE/TFE/VdF copolymers, CTFE/TFE/PAVE copolymers, CTFE/TFE/Et copolymers, CTFE/TFE/HFP/PAVE copolymers and CTFE/TFE/VdF/PAVE copolymers and, among these, CTFE/TFE/PAVE copolymers are preferred.

The CTFE unit and the TFE unit in the CTFE copolymers amount to 90 to 99.9 mole percent, and the monomer [A] unit amounts to 10 to 0.1 mole percent. When the monomer [A] unit content is less than 0.1 mole percent, the moldability, environmental stress cracking resistance and stress cracking resistance tend to become poor and, when it is above 10 mole percent, the liquid chemical impermeability, heat resistance and mechanical characteristics tend to become poor.

In cases the monomer [A] is a PAVE, a more preferred lower limit to the monomer [A] unit content is 0.5 mole percent, a more preferred upper limit is 7 mole percent and a still more preferred upper limit is 3 mole percent.

The CTFE copolymer constitutes a resin.

The CTFE copolymer can be prepared by any of the conventional methods of polymerization, for example bulk polymerization, solution polymerization, emulsion polymerization or suspension polymerization. Preferably, it is prepared by suspension polymerization, however.

The CTFE copolymer is preferably one having a melting point [Tm] of 150°C to 300°C. A more preferred lower limit is 170°C.

The Tm is the temperature corresponding to the melting peak as measured at a temperature raising rate of 10°C/minute using a differential scanning calorimeter [DSC].

Preferred as the CTFE copolymer is one for which the temperature [Tx] required for 1% by mass of the CTFE copolymer subjected to heating testing to be decomposed is not lower than 380°C. A more preferred lower limit is 390°C, and a still more preferred lower limit is 400°C.

The heat decomposition temperature [Tx] is the value obtained by measuring the temperature necessary for 1% by mass of the mass of the CTFE copolymer subjected to heating testing to be lost using a differential calorimetry/thermogravimetry apparatus [TG-DTA].

For the CTFE copolymer, the difference [Tx - Tm] between the melting point [Tm] and the temperature [Tx] for decomposition of 1% by mass of the CTFE copolymer is preferably not smaller than 100°C. When the difference is smaller than 100°C, the range within which molding is possible is so narrow that there is only a narrow range of choice of molding conditions. Since the above-mentioned CTFE copolymer has a broad temperature range in which molding is possible, as mentioned above, a high-melting polymer can be used as a counterpart material in carrying out coextrusion molding. A preferred lower limit to the difference [Tx - Tm] is 190°C. An upper limit to the difference [Tx - Tm] may be set at 200°C, for instance, since the range of choice of molding conditions is satisfactorily broad within the above range.

The fluororesin (a) preferably further comprises, in addition to the fluororesin (a1), a fluororesin (a2) having a fuel permeation coefficient exceeding 0.3 g·mm/m$^2$/day but not higher than 1 g·mm/m$^2$/day.

That laminate of the invention which has a layer (A) comprising the fluororesin (a1) and fluororesin (a2) can be readily adjusted so that it may show a desired level of fuel impermeability. A preferred upper limit to the fuel permeation coefficient of the fluororesin (a2) is 0.9 g·mm/m$^2$/day, a more preferred upper limit thereto is 0.85 g·mm/m$^2$/day, and a preferred lower limit is 0.35 g·mrn/m$^2$/day and a more preferred lower limit is 0.4 g·mm/m$^2$/day.

As examples of the fluororesin (a2), there may be mentioned those copolymer (I-II) and copolymers (I-III) mentioned hereinabove.

The fuel permeation coefficient so referred to herein is the value calculated from the change in mass, as measured at 60°C, of a sheet prepared from the measurement target resin as placed in a fuel permeation coefficient measurement cup containing an isooctane/toluene/ethanol mixed solvent prepared by mixing up isooctane, toluene and ethanol in a volume ratio of 45:45:10.

The layer (A) in the laminate of the invention may be formed using a polymer alloy comprising the fluororesin (a1) and fluororesin (a2) or by lamination of the fluororesin (a1) and fluororesin (a2), as described hereinabove referring to the case of using two or more copolymer (I) species, and, in the case of lamination of the fluororesin (a1) and fluororesin (a2), both the fluororesins can attain a sufficient level of adhesion owing to the compatibility therebetween without introducing any of the adhesive functional groups to be described later herein.

As regards the method of forming a polymer alloy of the fluororesin (a1) and fluororesin (a2), the fluororesin (a1) and fluororesin (a2) are subjected to dry blending, if desired, and the alloy formation is carried out in the conventional manner by melt kneading. In the melt kneading, use can be made of a high-temperature kneader or screw type extruder, for instance. In the case of admixing an electrically conductive material (to be described later herein), the use of a twin-screw extruder is preferred so that uniform admixing of the electrically conductive material may be attained.

In the fields of application where interlayer adhesion is required between the layer (A) and the counterpart material(s) neighboring the layer (A) in the laminate of the invention, the fluororesin is preferably an adhesive fluororesin. The counterpart material is not particularly restricted but may be, for example, a layer (B) comprising a fluorine-free organic material.

In cases where the counterpart material to the layer (A) is a layer (B) comprising a fluorine-free organic material, the above-mentioned adhesive fluororesin is preferably one having adhesiveness to the layer (B).

As the above-mentioned adhesive fluororesin, there may be mentioned ones endowed with adhesiveness, for example owing to their having an adhesive functional group or groups and/or as a result of conversion, upon heating, of a site or sites in the molecular structure, which are other than an adhesive functional group or groups, to a structure or structures manifesting adhesiveness. The fluorine-containing ethylenic copolymer so referred to herein and comprising the fluororesin (a) consisting of the copolymer (I) etc. can conceptually include such adhesive fluororesins. The adhesive fluororesin is preferably one having an adhesive functional group or groups since such one is excellent in adhesiveness. The term "adhesive functional group" as used herein means a functional group capable of participating in adhesion to the counterpart material or materials.

The adhesive functional group is not particularly restricted but, when the fluorine-free organic material constituting the layer (B) has a polar functional group(s), it may be any of those groups capable of reacting with the polar functional group(s) or capable of intermolecularly interacting, for example in the manner of hydrogen bonding.

As the adhesive functional group, there may be mentioned, among others, the carbonyl group, carbonate group, haloformyl group, formyl group, carboxyl group, carbonyloxy group [-C(=O)O-], acid anhydride group [-C(=O)O-C(=O)-], isocyanato group, amide group [-C(=O)-NH-], imide group [-C(=O)-NH-C(=O)-], urethane bond [-NH-C(=O)O-], carbamoyl group [$NH_2$-C(=O)-], carbamoyloxy group [$NH_2$-C(=O)O-], ureido group [$NH_2$-C(=O)-NH-] and oxamoyl group [$NH_2$-C(=O)-C(=O)-]. From the ease of introduction and/or high reactivity viewpoint, the carbonyl portion of a carbonate group or a haloformyl group is preferred as the carbonyl group mentioned above.

The carbonate group is a group comprising a linkage generally represented by [-OC(=O)O-] and is represented as an -OC(=O)O-R group (in the formula, R represents an organic group, a group I atom, a group II atom or a group VII atom). The organic group represented by R in the above formula is, for example, an alkyl group containing 1 to 20 carbon atoms, or an ether bond-containing alkyl group containing 2 to 20 carbon atoms and preferably is an alkyl group containing 1 to 8 carbon atoms or an ether bond-containing alkyl group containing 2 to 4 carbon atoms, among others. The carbonate group is, for example, - OC(=O)O-$CH_3$, -OC(=O)O-$C_3H_7$, -OC(=O)O-$C_8H_{17}$, or -OC(=O)O-$CH_2CH_2OCH_2CH_3$.

The haloformyl group is represented by -COY (in which Y represents a group VII atom) and is, for example, -COF or -COCl.

The number of the adhesive functional groups is to be appropriately selected according to the counterpart material species to be used for lamination, the shape or form, the purpose of the adhesion, the field of use, the bonding strength required, the tetrafluoroethylene-based copolymer species, which is to be described later herein, and the method of adhesion, among others.

The adhesive fluororesin, when it has an adhesive functional group(s), may be one having the adhesive functional group(s) either at a polymer chain terminus or termini or on a side chain or side chains, or one comprising a polymer having the adhesive functional group(s) both at a polymer chain terminus or termini and on a side chain or side chains. In cases where it has an adhesive functional group(s) at a polymer chain terminus or termini, it may have the same at both polymer chain termini or only at either one of the termini. In the case of the adhesive fluororesin having an adhesive functional group(s), one comprising a polymer having the adhesive functional group(s) at a polymer terminus or termini is preferred, since such will not lower the heat resistance, mechanical characteristics or chemical resistance but is advantageous from the productivity and/or cost viewpoint.

The fluorine-containing ethylenic polymer preferably has a melting point of 130 to 280ºC. From the viewpoint of the ease of coextrusion molding with the fluorine-free organic material to be described later herein, such as a polyamide resin or polyolefin resin, the fluorine-containing ethylenic polymer more preferably has a melting point of 150 to 280ºC, a still more preferred lower limit is 180ºC and a still more preferred upper limit is 260ºC.

The above-mentioned melting point of the fluorine-containing ethylenic polymer is the temperature corresponding to the melting peak upon temperature raising at a rate of 10ºC/minute using a differential scanning calorimeter [DSC].

Suited for use as the fluorine-containing ethylenic polymer is a high-melting type one having a melting point of 180 to 270ºC and a melt flow rate [MFR] at 297ºC of 0.1 to 100 g/10 minutes so that the fuel impermeability of the product laminate may be more increased.

A more preferred lower limit to the above melting point is 200ºC, and a more preferred upper limit thereto is 260ºC.

The MFR is the value obtained by measuring, using a melt indexer, the mass of the fluorine-containing ethylenic polymer flowing out, per 10 minutes, through a nozzle with a diameter of 2 mm and a length of 8 mm under a load of 5 kg.

The method of polymerization for preparing the above-mentioned fluorine-containing ethylenic polymer is not particularly restricted but includes, for example, solution polymerization, bulk polymerization and emulsion polymerization, among others. From the industrial viewpoint, however, suspension polymerization is preferred. The suspension polymerization is preferably carried out in an aqueous medium, and a fluorine-containing medium may be added thereto. As the fluorine-containing medium, there may be mentioned, among others, hydrogen-containing chlorofluoroalkanes such as $CH_3CClF_2$, $CH_3CCl_2F$, $CF_3CF_2CCl_2H$ and $CF_2ClCF_2CFHCl$; hydrogen-free chlorofluoroalkanes such as $CF_2ClCFClCF_2CF_3$ and $CF_3CFClCFClCF_3$; perfluoroalkanes such as $CF_3CF_2CF_2CF_3$, $CF_3CF_2CF_2CF_2CF_3$ and $CF_3CF_2CF_2CF_2CF_2CF_3$; and perfluorocycloalkanes such as perfluorocyclobutane. Perfluoroalkanes and perfluorocycloalkanes are preferred among them.

In polymerizing the fluorine-containing ethylenic polymer, the polymerization temperature is not particularly restricted but may be 0 to 100ºC. The polymerization pressure is to be appropriately selected according to the solvent species employed, the amount and vapor pressure thereof, the polymerization temperature and other polymerization conditions and, generally, it may be 0 to 9.8 MPaG.

In polymerizing the fluorine-containing ethylenic polymer, an ordinary chain transfer agent, for example a hydrocarbon such as isopentane, n-pentane, n-hexane or cyclohexane; an alcohol such as methanol or ethanol; or a halogenated hydrocarbon such as carbon tetrachloride, chloroform, methylene chloride or methyl chloride, may be used for molecular weight adjustment.

Generally used as the method of adhesive functional group introduction into polymer chain terminus or termini is the method comprising carrying out the polymerization using a polymerization initiator having, within the molecule thereof, the desired adhesive functional group(s) itself(themselves) or a functional group(s) convertible to the desired adhesive functional group(s). When the adhesive functional groups are carbonyl group-containing ones, the method comprising polymerizing the respective monomers mentioned above using a peroxydicarbonate as the polymerization initiator is preferred from the viewpoint of economy, heat resistance and/or chemical resistance, among others.

The layer (A) in the laminate of the invention may be rendered electrically conductive by further incorporating an electrically conductive material in the fluororesin mentioned above. The electrically conductive material is not particularly restricted but may be, for example, an electrically conductive simple substance powder or fiber such as a metal or carbon; an electrically conductive compound powder such as zinc oxide; and a powder surface-treated for conductivity, among others.

The electrically conductive simple substance powder or fiber is not particularly restricted but includes, among others, powders of metals such as copper and nickel; metal fibers made of iron, stainless steel, etc.; carbon black, and carbon fibers.

The powder surface-treated for conductivity is a powder obtained by subjecting a nonconductive powder, such as glass beads or titanium oxide, to surface-treatment for conductivity. The treatment for conductivity is not particularly restricted but may be, for example, metal sputtering or nonelectrolytic plating. Among the electrically conductive materials, carbon black is preferably used because of its being advantageous from the economy and/or electrostatic charge accumulation inhibition viewpoint.

In incorporating the electrically conductive material into the fluororesin, pellets are preferably prepared in advance following melt kneading.

As for the pellet heating conditions in pellet preparation after melt kneading, the pelletization is generally carried out at a temperature not lower than the glass transition temperature of the fluororesin but lower than the melting point of the fluororesin. Generally, it is carried out preferably at 130 to 200ºC for 1 to 48 hours. The preliminary pellet preparation can result in uniform dispersion of the electrically conductive material in the fluororesin in the layer (A) produced and, accordingly, in uniform provision with conductivity.

The usage of the electrically conductive material is to be appropriately selected according to the fluororesin species, the conductivity characteristics required and the molding conditions, among others. Preferably, it is 1 to 30 parts by mass per 100 parts by mass of the fluororesin. A more preferred lower limit is 5 parts by mass, and a more preferred upper limit is 20 parts by mass.

The fluororesin conductive composition resulting from incorporation of the electrically conductive material in the fluororesin preferably has a surface resistance value of $1 \times 10^\circ$ to $1 \times 10^9$ $\Omega\cdot$cm. A more preferred lower limit is $1 \times 10^2$ $\Omega\cdot$cm, and a more preferred upper limit is $1 \times 10^8$ $\Omega\cdot$cm.

The "surface resistance value of fluororesin conductive composition" so referred to herein is the value obtained by feeding pellets obtained by melt kneading of the electrically conductive material and fluororesin to a melt indexer, heating the pellets in the melt indexer to an arbitrary temperature within the range of 200 to 400ºC and measuring the surface resistance value of the extrudate strand obtained by extrusion using a battery-powered insulation resistance tester.

The layer (A) in the laminate of the invention may further contain, in addition to the above-mentioned electrically conductive material, one or more of various additives, for example stabilizers such as heat stabilizers, reinforcing agents, fillers, ultraviolet absorbers and pigments, as incorporated therein each in an amount not defeating the object of the invention. These additives can render the layer (A) improved in such characteristics as heat stability, surface hardness, wear resistance, antistatic properties and weathering resistance.

The laminate of the invention has a layer (B) comprising a fluorine-free organic material.

The fluorine-free organic material is an organic material containing no fluorine atoms.

The fluorine-free organic material is preferably a resin coextrudable with the fluororesin of the layer (A).

The layer (B) is not required to be excellent in fuel impermeability, since the laminate of the invention comprises the above-mentioned layer (A) and, therefore, even when the layer (B) is not excellent in fuel impermeability, the laminate as a whole can acquire a high level of fuel impermeability. However, the use of a fuel-impermeable resin as the fluorine-free organic material is not excluded but the use of a fuel-impermeable resin is preferred.

The fuel-impermeable resin to be used as the fluorine-free organic material is preferably a resin comprising a polymer high in crystallinity, more preferably a resin comprising a polar functional group-containing polymer high in crystallinity and great in intermolecular force.

The polar functional group is a functional group having polarity and capable of participating in adhesion to the adhesive fluororesin mentioned above. The polar functional group may be the same functional group as the adhesive function group which the adhesive fluororesin has, or may be a different function group.

The polar functional group is not particularly restricted but includes, for example, those mentioned hereinabove as adhesive functional groups and, further, a cyano group, sulfide groups and a hydroxyl group, among others. Among them, the carbonyloxy, cyano, sulfide and hydroxyl groups are preferred, and the hydroxyl group is more preferred.

The fluorine-free organic material is preferably a polyamide-based resin and/or a polyolefin-based resin.

The polyamide resin comprises a polymer having, within the molecule, the amide bond [-NH-C(=O)-] as a repeating unit.

The polyamide-based resin may be the so-called nylon resin comprising a polymer in which each amide bond within the molecular is bound to an aliphatic structure(s) and/or an alicyclic structure(s), or the so-called aramid resin comprising a polymer in which each amide bond within the molecule is bound to aromatic structures.

The nylon resin is not particularly restricted but includes, among others, those comprising nylon 6, nylon 66, nylon 11, nylon 12, nylon 610, nylon 612, nylon 6/66, nylon 66/12, nylon 46, a metaxylylenediamine/adipic acid copolymer, or a like polymer. Two or more of these may be used in combination.

The aramid resin is not particularly restricted but includes, among others, polyparaphenyleneterephthalamide and polymetaphenyleneisophthalamide.

The polyamide-based resin may also be one comprising a macromolecular compound having a partial structure containing no repeating unit amide bond within the molecule as resulting from block copolymerization or graft copolymerization. As such polyamide-based resin, there may be mentioned the resins comprising a polyamide-based elastomer such as a nylon 6/polyester copolymer, nylon 6/polyether copolymer, nylon 12/polyester copolymer or nylon 12/polyether copolymer. These polyamide-based elastomers are the products of block copolymerization of an oligomeric nylon and an oligomeric polyester through ester bonding, or by block copolymerization of an oligomeric nylon and an oligomeric polyether via ether bonding. The oligomeric polyester is, for example, polycaprolactone or polyethylene adipate, and the oligomeric polyether is, for example, polyethylene glycol, polypropylene glycol or polytetramethylene glycol. Preferred as the polyamide-based elastomer are nylon 6/polytetramethylene glycol copolymers and nylon 12/polytetramethylene glycol copolymers.

As the polyamide-based resin, which can give a satisfactory level of mechanical strength even when polyamide-based resin layers are thin, there may be mentioned, among others, nylon 6, nylon 66, nylon 11, nylon 12, nylon 610, nylon 612, nylon 6/66, nylon 66/12, nylon 6/polyester copolymers, nylon 6/polyether copolymers, nylon 12/polyester copolymers and nylon 12/polyether copolymers, and two or more of these may be used in combination.

The polyolefin-based resin is a resin having a monomer unit(s) derived from a vinyl group-containing monomer (s) containing no fluorine atoms. The vinyl group-containing monomer containing no fluorine atoms is not particularly restricted but may be, for example, any of those fluorine-free ethylenic monomers mentioned hereinabove referring to the fluororesin and, in the fields of application where a sufficient level of interlaminar adhesion to the counterpart material of the layer (A), for instance, is required, it is preferably one having the polar functional group(s) mentioned above.

The polyolefin-based resin is not particularly restricted but includes, among others, polyolefins such as polyethylene, polypropylene, high-density polyolefins and, further, modified polyolefins resulting from modification of the polyolefins mentioned above with maleic anhydride, for instance.

As the fluorine-free organic material, there may be mentioned those polyamide-based resins and polyolefin-based resins mentioned above and, in addition, resins comprising ethylene/vinyl alcohol copolymers, polyurethane resins, polyester resins, polyaramid resins, polyimide resins, polyamideimide resins, polyphenylene oxide resins, polyacetal resins, polycarbonate resins, acrylic resins, styrenic resins, acrylonitrile/butadiene/styrene resins [ABSs], vinyl chloride-based resins, cellulosic resins, polyetheretherketone resins [PEEKs], polysulfone resins, polyethersulfone resins [PESs], polyetherimide resins, and polyphenylene sulfide resins, among others.

In the layer (B) in the laminate of the invention, there may further be incorporated one or more of various additives, for example stabilizers such as heat stabilizers, reinforcing agents, fillers, ultraviolet absorbers and pigments, each in an amount not defeating the object of the invention. These additives can render the layer (B) improved in such characteristics as heat stability, surface hardness, wear resistance, antistatic properties and weathering resistance.

In the laminate of the invention, the layer (A) and layer (B) may each comprise one single layer or have a two-layer or further multilayer structure. In cases where the layer (B) has a two-layer or further multilayer structure, it is not always necessary for two arbitrary layers to be next to each other; thus, for example, the layer (A) may be sandwiched between the arbitrary two layers.

The laminate of the invention may also be one comprising the layer (A) and layer (B) and, further, another layer or other layers. As the other layer, there may be mentioned, for example, a protective layer comprising an elastomer, for instance, and protecting the laminate against vibration, shock, etc.

Even when it is thinner than the conventional resin laminates, the laminate of the invention can acquire a high level of fuel impermeability so that the fuel permeation rate may fall within the above-mentioned range. The conventional resin laminates can indeed be improved in fuel impermeability by increasing the thickness thereof. In certain fields of use, however, thin laminates are preferred and, when thin, the conventional resin laminates cannot attain a high level of fuel impermeability.

The laminate of the invention can be diminished in thickness to 1 mm or less, for instance, while retaining the fuel permeation rate within the range mentioned above. The thickness of the laminate of the invention may vary depending on the intended use thereof and, when it is used as a fuel tube, which is to be described later herein, the thickness is preferably 1.5 mm or less, more preferably 1.0 mm or less.

The thickness of the layer (A) is preferably 0.001 to 0.5 mm, although it depends on the intended use. A more preferred lower limit is 0.003 mm, a still more preferred lower limit is 0.01 mm, and a more preferred upper limit is 0.4 mm and a still more preferred upper limit is 0.3 mm.

The thickness of the layer (B) is preferably 0.005 to 5 mm, although it depends on the intended use. A more preferred lower limit is 0.01 mm.

The laminate of the invention may take any of various forms, including film forms, sheet forms, tube forms, hose forms, bottle forms and tank forms, among others. The film forms, sheet forms, tube forms and hose forms may be corrugated or convoluted.

When the fluororesin and fluorine-free organic material are coextrudable, the laminate of the invention is generally molded by the conventional multilayer coextrusion methods, for example by the multimanifold method or feedblock method.

The laminate of the invention can be used in the following fields of application.

Films, sheets; films for foodstuffs, sheets for foodstuffs, films for pharmaceuticals, sheets for pharmaceuticals, diaphragms for diaphragm pumps, various packing elements, etc.

Tubes, hoses; fuel tubes or fuel hoses such as auto fuel tubes or auto fuel hoses, solvent tubes or solvent hoses, paint tubes or pain hoses, auto radiator hoses, air conditioner hoses, brake hoses, electric wire coverings, food/drink tubes or food/drink hoses, etc.

Bottles, containers, tanks; auto radiator tanks, gasoline tanks, other fuel tanks, solvent tanks, paint tanks, liquid chemical containers such as containers for liquid chemicals for use in semiconductor manufacture, food/drink tanks, etc.

Others; carburetor flange gaskets, various seals for autos such as fuel pump O rings, various mechanical seals such as hydraulic component seals, gears, etc.

Since it has a fuel permeation rate of not higher than 2 $g/m^2/day$, as described hereinabove, the laminate of the invention can be adequately used as a laminate for fuel tube for use as a fuel tube.

In cases where the laminate of the invention is to be used as a laminate for fuel tube, the layer (A) is preferred as the innermost layer of the fuel tube. The fuel tube innermost layer, when in contact with an inflammable liquid such as gasoline, tends to allow static charge accumulation. For avoiding such static charge-due ignition, the layer (A) is preferably one supplemented with an electrically conductive material.

The laminate of the invention can suitably be used in the fields of application where it comes into contact with a fuel during the use thereof, for example as a tube, including a fuel tube, a hose or a tank. In this case, the part coming into contact with the fuel is preferably the layer (A). Since the fuel-contacting place is generally the inner layer, the layer (B) serves as an outer layer while the layer (A) is the inner layer. The terms "outer layer" and "inner layer" are used herein only to indicate the relative positions of the layer (A) and layer (B), namely which layer is the outer layer or inner layer, in a form or shape in which the inner side and outer side are conceptually distinguishable, for example in the case of tubes, hoses, tanks, etc. The laminate may also comprise a further layer(s) on the surface of the layer (B) which is opposite to the surface in contact with the layer (A) and/or a layer(s) between the layer (A) and layer (B).

The concept "intermediate layer" as employed herein indicates a layer occurring between the outer layer and inner layer.

In the laminate of the invention, it is not always necessary for the boundary between two layers in contact with each other to be distinct. Thus, the laminate may have a layer structure such that molecular chains of the polymers constituting the respective layers show concentration gradients by entering the respective other layers through the contacting face.

The layer constitution, which is preferred, of the laminate of the invention for use as a fuel tube is not particularly restricted but includes, among others, the following:

A laminate comprising

layer 1: a layer comprising an adhesive fluororesin and
layer 2: a layer comprising a polyamide-based resin;

A laminate comprising

layer 1: a layer comprising an adhesive fluororesin,
layer 2: a layer comprising an adhesive fluororesin and
layer 3: a layer comprising a polyamide-based resin; and

A laminate comprising

layer 1: a layer comprising an adhesive fluororesin,
layer 2: a layer comprising an ethylene/vinyl alcohol copolymer,
layer 3: a layer comprising a modified polyolefin resin and
layer 4: a layer comprising a high-density polyolefin resin.

The layers of the above-mentioned fuel tube laminates are subjected to lamination in the order of layer number.

BEST MODES FOR CARRYING OUT THE INVENTION

The following examples reference examples and comparative Examples illustrate the present invention in further detail.

Synthesis Example 1: Synthesis of fluororesin F-A

A 174-L autoclave was charged with 51 L of distilled water and, after thorough nitrogen substitution, was further charged with 35 kg of perfluorocyclobutane and 10.4 kg of perfluoro(methyl vinyl ether) ($CF_2$=$CFOCF_3$) [PMVE], and the system inside temperature was maintained at 35ºC and the rate of stirring at 200 rpm. Then, tetrafluoroethylene [TFE] was fed under pressure until arrival at 0.8 MPa and, thereafter, 0.38 kg of a 50% methanol solution of di-n-propylperoxydicarbobate was fed to initiate the polymerization. To compensate for the pressure reduction in the system inside as otherwise resulting from the progress of the polymerization, a gas composed of TFE and PMVE in a mole ratio of 87:13 was continuously fed to maintain the system inside pressure at 0.8 MPa and the polymerization was continued for 20 hours. After pressure release to atmospheric pressure, the reaction product obtained was washed with water and dried to give 20 kg of a powder.

This powder was pelletized under the melt kneading conditions and pellet heating conditions shown in Table 1 to give a fluororesin (F-A) in pellet form.

In Table 1, C1, C2, C3 and C4 indicates the four temperature measurement sites on the cylinder. The temperature measurement sites were arranged at equal pitches, from C1 which was farthest from the injection nozzle to C4 which was nearest. In Table 1, AD denotes the adaptor temperature, and D the die temperature.

Table 1

| | Melt kneading/extrusion conditions | | | | | | | Pellet heating conditions | |
|---|---|---|---|---|---|---|---|---|---|
| | C1 [°C] | C2 [°C] | C3 [°C] | C4 [°C] | AD [°C] | D [°C] | Number of screw revolutions [rpm] | Temperature [°C] | Time [hr] |
| Synthesis Example 1 | 180 | 260 | 265 | 265 | 265 | 265 | 20 | 150 | 24 |

(continued)

| | | Melt kneading/extrusion conditions | | | | | | Pellet heating conditions | |
|---|---|---|---|---|---|---|---|---|---|
| | C1 [°C] | C2 [°C] | C3 [°C] | C4 [°C] | AD [°C] | D [°C] | Number of screw revolutions [rpm] | Temperature [°C] | Time [hr] |
| Synthesis Example 2 | 200 | 280 | 300 | 300 | 300 | 300 | 20 | 150 | 24 |
| Synthesis Example 3 | 180 | 265 | 275 | 275 | 275 | 275 | 20 | 150 | 24 |
| Synthesis Example 4 | 200 | 280 | 300 | 300 | 300 | 300 | 15 | 150 | 24 |
| Synthesis Example 5 | 200 | 265 | 275 | 275 | 275 | 275 | 15 | 150 | 24 |
| Synthesis Example 6 | 180 | 260 | 265 | 265 | 265 | 265 | 20 | 150 | 24 |
| Synthesis Example 7 | 180 | 260 | 265 | 265 | 265 | 265 | 20 | 150 | 24 |
| Synthesis Example 8 | 180 | 260 | 265 | 265 | 265 | 265 | 15 | 150 | 24 |

Synthesis Example 2: Synthesis of fluororesin F-B

A 174-L autoclave was charged with 47 of distilled water and, after thorough nitrogen substitution, was further charged with 49 kg of hexafluoropropylene, and the system inside temperature was maintained at 34ºC and the rate of stirring at 200 rpm. Then, TFE was fed under pressure until arrival at 1.03 MPa and, thereafter, 0.58 kg of a perfluorohexane solution containing 8% by mass of the polymerization initiator $(H(CF_2CF_2)_3COO)_2$ was fed to initiate the polymerization. To compensate for the pressure reduction in the system inside as otherwise resulting from the progress of the polymerization, TFE was continuously fed to maintain the system inside pressure at 1.03 MPa. During the polymerization, feeding of 0.58 kg of the 8% (by mass) solution of $(H(CF_2CF_2)_3COO)_2$ was repeated at 2-hour intervals until the lapse of 6 hours from the start of the polymerization and, thereafter, feeding of 0.3 kg of the same solution was repeated at 2-hour intervals. In this manner, the polymerization was continued for 15 hours. After pressure release to atmospheric pressure, the reaction product obtained was washed with water and dried to give 18 kg of a powder.

This powder was pelletized under the melt kneading conditions and pellet heating conditions shown in Table 1 to give a fluororesin (F-B) in pellet form.

Synthesis Example 3: Synthesis of fluororesin F-C

The powder of Synthesis Example 1 and powder of Synthesis Example 2 (10 kg each) were dry-blended using a Henschel mixer, and the mixture was pelletized under the melt kneading conditions and pellet heating conditions shown in Table 1 to give a fluororesin (F-C) in pellet form.

Synthesis Example 4: Preparation of fluororesin F-D conductive composition

Using a Henschel mixer, 91 parts by mass of the dried powder of fluororesin (F-B) obtained in Synthesis Example 2 was dry-blended with 9 parts by mass of an electrically conductive material (acetylene black), and the mixture was pelletized under the melt kneading conditions and pellet heating conditions shown in Table 1 to give a fluororesin (F-D) conductive composition.

A bar cut out from the strand obtained on the occasion of melt flow rate measurement had a surface resistance value of $10^5 \ \Omega \cdot cm/cm$, and the inner layer of the three-layer tube of Example 2 as manufactured using this fluororesin conductive composition also had a surface resistance value of $10^5 \ \Omega \cdot cm/cm$.

Synthesis Example 5: Preparation of fluororesin F-E conductive composition

The powder of Synthesis Example 1 and powder of Synthesis Example 2 (10 kg each) were dry-blended with 2.0 kg of acetylene black as an electrically conductive material using a Henschel mixer, and the resulting mixture was pelletized under the melt kneading conditions and pellet heating conditions shown in Table 1 to give a fluororesin (F-E) in pellet form.

A bar cut out from the strand obtained on the occasion of melt flow rate measurement had a surface resistance value of $10^5$ $\Omega \cdot$cm/cm, and the inner layer of the two-layer tube of Example 4 as manufactured using this fluororesin conductive composition also had a surface resistance value of $10^5$ $\Omega \cdot$cm/cm.

Synthesis Example 6: Synthesis of fluororesin F-F

The polymerization procedure of Example 1 was carried out in the same manner except that PMVE was used in an amount of 13 kg and the TFE gas and PMVE gas were fed continuously in a mole ratio of 84:16. Thus was obtained 20 kg of a powder.

This powder was pelletized under the melt kneading conditions and pellet heating conditions shown in Table 1 to give a fluororesin (F-F) in pellet form.

Synthesis Example 7: Synthesis of fluororesin F-G

A 174-L autoclave was charged with 43 L of distilled water and, after thorough nitrogen substitution, was further charged with 87 kg of perfluorocyclobutane and 4.3 kg of perfluoro(propyl vinyl ether) ($CF_2$=$CFOCF_2CF_2CF_3$) [PPVE], and the system inside temperature was maintained at 35ºC and the rate of stirring at 200 rpm. Then, 8.4 kg of chlorotrifluoroethylene [CTFE] was fed and, further, tetrafluoroethylene [TFE] was fed under pressure until arrival at 0.67 MPa and, thereafter, 0.2 kg of a 50% methanol solution of di-n-propylperoxydicarbobate was fed to initiate the polymerization.

To compensate for the pressure reduction in the system inside as otherwise resulting from the progress of the polymerization, TFE and CTFE were continuously fed, in a mole ratio of 39:61, to maintain the system inside pressure at 0.67 MPa, and the polymerization was continued for 15 hours. After pressure release to atmospheric pressure, the reaction product obtained was washed with water and dried to give 11 kg of a powder.

This powder was pelletized under the melt kneading conditions and pellet heating conditions shown in Table 1 to give a fluororesin (F-G) in pellet form.

Synthesis Example 8: Preparation of fluororesin F-H conductive composition

Using a Henschel mixer, 91 parts by mass of the dried powder of fluororesin (F-G) as obtained in Synthesis Example 7 was dry-blended with 9 parts by mass of an electrically conductive material (acetylene black), and the mixture was pelletized under the melt kneading conditions and pellet heating conditions shown in Table 1 to give a fluororesin (F-H) conductive composition.

A bar cut out from the strand obtained on the occasion of melt flow rate measurement had a surface resistance value of $10^5$ $\Omega \cdot$cm/cm, and the inner layer of the two-layer tube of Example 7 as manufactured using this fluororesin conductive composition also had a surface resistance value of $10^5$ $\Omega \cdot$cm/cm.

The fluororesins obtained in Synthesis Examples 1 to 8 were subjected to the following physical property evaluations.

(1) Determination of the number of carbonate groups

Each fluororesin in the form of a white powder or melt-extruded pellets was compression molded at room temperature to give a film with a thickness of 50 to 200 $\mu$m. This film was subjected to infrared absorption spectrometry. Since a peak due to the carbonyl group of the carbonate group [-OC(=O)O-] appears in the wavelength region of 1810 to 1815 cm$^{-1}$ [$\nu$(C=O)], the absorbance of that $\nu$(C=O) peak was measured, and the number N of carbonate groups per $10^6$ main chain carbon atoms in the polymer constituting the adhesive fluororesin was calculated according to the formula (a) given below.

$$N = 500AW/\varepsilon df \qquad (a)$$

A: Absorbance of the carbonate group [-OC(=O)O-]-derived $\nu$(C=O) peak;
$\varepsilon$: Molar extinction coefficient of the carbonate group [-OC(=O)O-]-derived $\nu$(C=O) peak; based on the data for model compounds, the value of ε was estimated at ε=170 (1·cm$^{-1}$·mol$^{-1}$) ;

W: Average molecular weight of the monomer as calculated based on the composition of the adhesive fluororesin;

d: Density of the film (g/cm$^3$);

f: Thickness of the film (mm).

As for the infrared spectrometric analysis conditions, scanning was performed 40 times using Perkin-Elmer FTIR spectrometer 1760X (product of Perkin-Elmer). The IR spectra obtained were subjected to automatic base line judgment using Perkin-Elmer Spectrum for Windows Ver. 1.4C, and the absorbance of the peak at 1810 to 1815 cm$^{-1}$ was determined. The film thickness was measured using a micrometer.

(2) Fluororesin composition determination

The composition of each fluororesin was determined by $^{19}$F NMR analysis.

(3) Melting point (Tm) measurement

The melting peak was recorded at a rate of temperature raising of 10ºC/minute using a Seiko differential scanning calorimeter [DSC], and the temperature corresponding to the maximum value was taken as the melting point (Tm).

(4) Melt flow rate (MFR) measurement of fluororesins

Using a melt indexer (product of Toyo Seiki Seisakusho), the mass (g) of the portion of each polymer allowed to flow out, per unit time (10 minutes), through a nozzle with a diameter of 2 mm and a length of 8 mm under a load of 5 kg was measured at each measurement temperature.

(5) Single layer fuel permeation coefficient determination

The resin pellets to be used in forming each layer of a tubular laminate were placed in a mold with a diameter of 120 mm, and the mold was placed in a pressing machine. For the fluororesin pellets of Synthesis Example 1, 3, 5 or 6, the pressing machine had been heated to 260ºC; for the pellets of Synthesis Example 2 or 4, at 280ºC; and, for the pellets of Synthesis Example 7 or 8, at 240ºC. The pellets were melt pressed under a pressure of about 2.9 MPa to give a 0.15-mm-thick sheet. The sheet obtained was placed in a SUS316 cup for permeation coefficient measurement having an inside diameter ø of 40 mm and a height of 20 mm and containing 18 ml of CE10 (fuel prepared by mixing up a mixture of isooctane and toluene in a volume ratio of 50:50 with 10% by volume of ethanol), and the changes in mass at 60ºC were measured over 1000 hours. The fuel permeation coefficient (g·mm/m$^2$/day) was calculated from the rate of change in mass per hour, the surface area of the sheet in contact with the liquid and the sheet thickness.

The results are shown in Table 2.

Table 2

| | Fluorine-containing ethylenic polymer | Composition [mole ratio] | Melting point [°C] | MFR [g/10 min] (Measurement temperature) | Number of carbonate groups per 10$^6$ main chain | Fuel permeation coefficient [g·mm/m$^2$/day] |
|---|---|---|---|---|---|---|
| Synthesis Example 1 | Fluororesin F-A | TFE/PMVE = 87.3/12.7 | 225 | 15 (265°C) | 230 | 0.8 |
| Synthesis Example 2 | Fluororesin F-B | TFE/HFP = 87/13 | 250 | 13 (297°C) | ND | 0.25 |
| Synthesis Example 3 | Fluororesin F-C | TFE/HFP/ PMVE = 87.1/6.6/6.3 | 235 | 8 (265°C) | 110 | 0.45 |
| Synthesis Example 4 | Fluororesin F-D | TFE/HFP =87/13 | 250 | 3.2 (297°C) | ND | 0.24 |

(continued)

|  | Fluorine-containing ethylenic polymer | Composition [mole ratio] | Melting point [°C] | MFR [g/10 min] (Measurement temperature) | Number of carbonate groups per $10^6$ main chain | Fuel permeation coefficient [g·mm/m²/day] |
|---|---|---|---|---|---|---|
| Synthesis Example 5 | Fluororesin F-E | TFE/HFP/PMVE = 87.1/6.6/6.3 | 235 | 4.5 (297°C) | 100 | 0.45 |
| Synthesis Example 6 | Fluororesin F-F | TFE/PMVE =83.7/16.3 | 202 | 22 (265°C) | 226 | 1.2 |
| Synthesis Example 7 | Fluororesin F-G | TFE/CTFE/PPVE = 38/60.5/1.5 | 199 | 12 (275°C) | 198 | 0.18 |
| Synthesis Example 8 | Fluororesin F-H | TFE/CTFE/PPVE =* 38/60.5/1.5 | 199 | 4 (275°C) | 182 | 0.18 |

Example 1 (Reference)

Using a three-material three-layer film extruding machine (product of PLABOR Co., Ltd. (Plastic Kogaku Kenkyusho)) equipped with a multimanifold T die, polyamide 12 (trademark: Vestamid X7297, product of Degussa Huls AG), the fluororesin (F-A) and the fluororesin (F-B) were fed to the three extruders to form the outer layer, intermediate layer and inner layer, respectively, and molded, under the extrusion conditions shown in Table 3, into a three-material three-layer multilayer tube with an outside diameter of 8 mm and an inside diameter of 6 mm.
The multilayer tube obtained was measured for interlaminar bonding strength and fuel permeation coefficient by the following methods.

(A) Initial bonding strength measurement

Test specimens with a width of 1 cm were cut out from the tubular laminate and subjected to 180º peeling testing at a rate of 25 mm/minute using a Tensilon universal testing machine. The initial bonding strength (N/cm) was determined as the mean of five maxima in the elongation-tensile strength graphs.

(B) Bonding strength measurement after fuel storage

The tubular laminate was cut into 40-cm-long pieces, each piece was equipped with a 120-ml SUS 316 reservoir tank using a Swagelock coupler, a fuel prepared by admixing CM15 (mixture of isooctane and toluene in a volume ratio of 50:50) with 15% by volume of methanol was filled into the assembly and, after 1000 hours of sealing at 60ºC, the bonding strength (N/cm) was measured in the same manner as mentioned above under (A) and reported as the bonding strength after fuel storage.

(C) Laminate fuel permeation rate measurement

The tubular laminate was cut into 40-cm-long pieces, each piece was equipped with a 120-ml SUS 316 reservoir tank using a Swagelock coupler, the permeation of CE10 at 60ºC was measured according to SAEJ 1737, and the fuel permeation rate (g/m²/day) was calculated from the wall thickness of the tubular laminate.
The results are shown in Table 3.

Example 2 (Reference)

Using a three-material three-layer film extruding machine (product of PLABOR) equipped with a multimanifold T die, polyamide 12 (trademark: Vestamid X7297, product of Degussa Huls AG), the fluororesin (F-A) and the fluororesin (F-D) conductive composition were fed to the three extruders to form the outer layer, intermediate layer and inner layer, respectively, and molded, under the extrusion conditions shown in Table 3, into a three-material three-layer multilayer tube with an outside diameter of 8 mm and an inside diameter of 6 mm. The multilayer tube obtained was evaluated in the same manner as in Example 1. The molding conditions and evaluation results are shown in Table 3.

Example 3 (Reference)

Using a two-material two-layer film extruding machine (product of PLABOR) equipped with a multimanifold T die, polyamide 12 (trademark: Vestamid X7297, product of Degussa Huls AG) and the fluororesin (F-C) were fed to the two extruders to form the outer layer and inner layer, respectively, and molded, under the extrusion conditions shown in Table 3, into a two-material two-layer multilayer tube with an outside diameter of 8 mm and an inside diameter of 6 mm. The multilayer tube obtained was evaluated in the same manner as in Example 1. The molding conditions and evaluation results are shown in Table 3.

Example 4 (Reference)

Using a two-material two-layer film extruding machine (product of PLABOR) equipped with a multimanifold T die, polyamide 12 (trademark: Vestamid X7297, product of Degussa Huls AG) and the fluororesin (F-E) conductive composition were fed to the two extruders to form the outer layer and inner layer, respectively, and molded, under the extrusion conditions shown in Table 3, into a two-material two-layer multilayer tube with an outside diameter of 8 mm and an inside diameter of 6 mm. The multilayer tube obtained was evaluated in the same manner as in Example 1. The molding conditions and evaluation results are shown in Table 3.

Example 5 (Reference)

Using a four-material four-layer film extruding machine (product of PLABOR) equipped with a multimanifold die, the fluororesin (F-C) of Synthesis Example 3, a resin comprising an ethylene/vinyl alcohol copolymer (trademark: Eval F101A, melting point 183ºC, MFR 1.3 g/10 minutes, product of Kuraray Co., Ltd.), a maleic acid-modified polyethylene resin (trademark: Admer NF528, melting point 120ºC, MFR 2.2 g/10 minutes, product of Mitsui Chemicals, Inc.) and high-density polyethylene (trademark: Novatec HD HJ340, melting point 131ºC, MFR 5.0 g/10 minutes, product of Japan Polychem Corp.) were fed to the four extruders to form the innermost layer, intermediate layer 1, intermediate layer 2 and outer layer, respectively, and molded in a continuous manner, under the extrusion conditions shown in Table 3, into a four-material four-layer tube with an outside diameter of 8 mm and an inside diameter of 6 mm. The strength of the interlaminar bonding between the innermost fluororesin layer and the neighboring ethylene/vinyl alcohol copolymer layer was measured. The molding conditions and evaluation results are shown in Table 3.

Example 6

A two-material two-layer multilayer tube was molded in the same manner as in Example 3 except that the fluororesin (F-G) was used for forming the inner layer. The molding conditions and evaluation results are shown in Table 3.

Example 7

A two-material two-layer multilayer tube was molded in the same manner as in Example 3 except that the fluororesin (F-H) conductive composition was used for forming the inner layer. The molding conditions and evaluation results are shown in Table 3.

Comparative Example 1

Using a two-material two-layer film extruding machine (product of PLABOR) equipped with a multimanifold T die, polyamide 12 (trademark: Vestamid X7297, product of Degussa Huls AG) and the fluororesin (F-F) were fed to the two extruders to form the outer layer and inner layer, respectively, and molded, under the extrusion conditions shown in Table 3, into a two-material two-layer multilayer tube with an outside diameter of 8 mm and an inside diameter of 6 mm. The multilayer tube obtained was evaluated in the same manner as in Example 1. The molding conditions and evaluation results are shown in Table 3.

Table 3

| | | Example 1 [*] | Example 2 [*] | Example 3 [*] | Example 4 [*] | Example 5 [*] | Example 6 | Example 7 | Comparative Example 1 |
|---|---|---|---|---|---|---|---|---|---|
| | | Three-material three-layer | Three-material three-layer | Two-material two-layer | Two-material two-layer | Four-material four-layer | Two-material two-layer | Two-material two-layer | Two-material two-layer |
| Inner layer | Materials | Fluororesin F-B | Fluororesin F-D conductive composition | Fluororesin F-C | Fluororesin F-E conductive composition | Fluororesin F-C | Fluororesin F-G | Fluororesin F-H conductive composition | Fluororesin F-F |
| | Cylinder temperature [°C] | 280-310 | 280-320 | 280-290 | 280-300 | 280-290 | 260-280 | 260-285 | 260-270 |
| | Adaptor temperature [°C] | 300 | 310 | 290 | 300 | 290 | 280 | 285 | 270 |
| Intermediate layer 1 | Materials | Fluororesin F-A | Fluororesin F-A | | | Eval F101A | | | |
| | Cylinder temperature [°C] | 280-290 | 280-290 | - | - | 160-210 | - | - | - |
| | Adaptor temperature [°C] | 290 | 290 | | | 210 | | | |
| Intermediate layer 2 | Materials | | | | | Admer NF528 | | | |
| | Cylinder temperature [°C] | - | - | - | - | 200-230 | - | - | - |
| | Adaptor temperature [°C] | | | | | 230 | | | |
| Outer layer | Materials | PA12 | PA12 | PA12 | PA12 | Novatec HDH | PA12 | PA12 | PA12 |
| | Cylinder temperature [°C] | 210-245 | 210-245 | 210-245 | 210-245 | 195-235 | 210-245 | 210-245 | 210-245 |
| | Adaptor temperature [°C] | 245 | 245 | 245 | 245 | 235 | 245 | 245 | 245 |
| Extrusion conditions | Die temperature [°C] | 290 | 300 | 290 | 290 | 265 | 280 | 285 | 290 |
| | Line speed [m/min] | 8 | 6 | 8 | 8 | 8 | 8 | 8 | 8 |
| | Water temperature [°C] | 10 | 10 | 10 | 10 | 10 | 10 | 10 | 10 |
| Tube outside diameter [mm] | | 8.03 | 8.02 | 8.01 | 8 | 8.01 | 8 | 8 | 8.01 |
| Wall thickness [mm] | Inner layer | 0.18 | 0.18 | 0.25 | 0.25 | 0.25 | 0.25 | 0.25 | 0.25 |
| | Intermediate layer 1 | 0.07 | 0.07 | - | - | 0.08 | - | - | - |
| | Intermediate layer 2 | - | - | - | - | 0.08 | - | - | - |
| | Outer layer | 0.75 | 0.75 | 0.75 | 0.75 | 0.59 | 0.75 | 0.75 | 0.75 |
| | Total wall thickness | 1 | 1 | 1 | 1 | 1 | 1 | 1 | 1 |
| Initial bonding strength [N/cm] | | 48 | 47 | 42 | 41 | 40 | 46 | 48 | 47 |
| Bonding strength after fuel storage [N/cm] | | 37 | 35 | 33 | 33 | 31 | 37 | 40 | 37 |
| Fuel permeation rate [g/m²/day] (solvent: CE10, temperature 60°C) | | 0.7 | 0.68 | 0.85 | 0.83 | 0.87 | 0.51 | 0.48 | 2 |

[*] (Reference)

From Table 3, it was revealed that the laminates of Example 1 and Example 2 in which an intermediate layer of adhesive fluororesin was used between a layer of polyamide 12 and a layer of a fluororesin were higher in initial bonding strength and lower in fuel permeation rate as compared with the laminates of Example 3 and Example 4 which had a two-layer structure comprising polyamide 12 and a fluororesin. It was revealed that the fuel permeation rate could be much reduced without impairing the bonding strength in Example 6 and Example 7 in which a CTFE copolymer was used.

## INDUSTRIAL APPLICABILITY

The laminate of the invention, which has the constitution described hereinabove, can have a high level of fuel impermeability. The laminate of the invention can be adequately used in the fields of use where it has a portion coming into contact with a fuel during the use thereof, for example as tubes, including fuel tubes, hoses, and tanks.

## Claims

1. A laminate having a fuel permeation rate of not higher than 1.5 g/m$^2$/day and having

    i) a layer (A) comprising a fluororesin (a) which

    - has a fuel permeation coefficient of $\leq$ 1 g·mm/m$^2$/day; and
    - comprises a fluororesin (al) having a fuel permeation coefficient of $\leq$ 0.3 g·mm/m$^2$/day and being constituted by a chlorotrifluoroethylene (CTFE) copolymer comprising
    90-99.9 mol-% of CTFE units and tetrafluoroethylene (TFE) units; and
    10-0.1 mol-% of units derived from a monomer [A] copolymerizable with CTFE and TFE; and

    ii) a layer (B) comprising a fluorine-free organic material.

2. The laminate of claim 1, wherein the fluorine-free organic material comprises a polyamide-based resin and/or a polyolefin-based resin.

3. A fuel tube comprising the laminate of claim 1 or 2, wherein layer (A) is the fuel tube innermost layer.

## Patentansprüche

1. Laminat mit einer Treibstoffdurchdringungsrate von nicht höher als 1,5 g/m$^2$/Tag, das folgendes aufweist:

    i) eine Schicht (A), die ein Fluoroharz (a) umfasst, das

    - einen Treibstoffpermeationskoeffizient von $\leq$ 1 g·mm/m$^2$/Tag aufweist; und
    - ein Fluoroharz (a1) mit einem Treibstoffpermeationskoeffizienten von $\leq$ 0,3 g·mm/m$^2$/Tag umfasst, das aus einem Chlorotrifluoroethylen (CTFE)-Copolymer aufgebaut ist, das folgendes umfasst:

        90 bis 99,9 Mol% an CTFE-Einheiten und Tetrafluoroethylen (TFE)-Einheiten; und
        10 bis 0,1 Mol% von Einheiten, die von einem mit CTFE und TFE copolymerisierbaren Monomer [A] abgeleitet sind; und

    ii) eine Schicht (B), die ein fluorfreies organisches Material umfasst.

2. Laminat gemäß Anspruch 1, worin das fluorfreie organische Material ein Harz auf Polyamidbasis und/oder ein harz auf Polyolefinbasis umfasst.

3. Treibstoffrohr, das das Laminat gemäß Anspruch 1 oder 2 umfasst, worin die Schicht (A) die innerste Schicht des Treibstoffrohrs ist.

## Revendications

1. Stratifié ayant un débit de perméation de carburant ne dépassant pas 1,5 g/m$^2$/jour et ayant

    i) une couche (A) comprenant une résine fluorée (a) qui

    - a un coefficient de perméation de carburant de $\leq$ 1 g·mm/m$^2$/jour ; et
    - comprend une résine fluorée (a1) ayant un coefficient de perméation de carburant de $\leq$ 0,3 g·mm/m$^2$/jour

et qui est constituée par un copolymère de chlorotrifluoroéthylène (CTFE) comprenant 90-99,9 mol% d'unités de CTFE et d'unités de tétrafluoroéthylène (TFE) ; et 10-0,1 mol% d'unités dérivées d'un monomère [A] copolymérisable avec le CTFE et le TFE ; et

    ii) une couche (B) comprenant un matériau organique sans fluor.

2. Stratifié selon la revendication 1 où le matériau organique sans fluor comprend une résine à base de polyamide et/ou une résine à base de polyoléfine.

3. Tube à carburant comprenant le stratifié selon la revendication 1 ou 2 où la couche (A) est la couche la plus interne du tube à carburant.

**EP 1 627 731 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002213655 A
- JP 2002267054 A
- WO 0118142 A